# DEMANDE DE BREVET EUROPEEN

(11) **EP 0 835 007 A1**
(43) Date de publication de la demande: **08.04.1998**
(21) Numéro de dépôt: 97202313.9
(22) Date de dépôt: 24.07.1997
(51) Int. Cl.: H04L 9/32

(54) **Dispositif et procédé de protection pour un numéro d'identification**

(30) Priorité: 31.07.1996 FR 9609640
(71) Demandeur: Philips Electronics N.V., 5621 BA Eindhoven (NL)
(72) Inventeur: Restif, Pascal, 75008 Paris (FR)
(74) Mandataire: Chaffraix, Jean

(57) **Abrégé**

Ce dispositif comporte un système de protection pour un numéro d'identification (ESN) emmagasiné dans une mémoire (54). Ce système muni de moyens de cryptage crypte (Sig) ledit numéro d'identification (ENS) et ce numéro crypté est aussi mémorisé dans la mémoire (Sig_{M}) (54), ceci étant fait au stade de la fabrication du dispositif. A chaque mise en route du dispositif, le système de protection active des moyens de comparaison (K10) pour recrypter (K5) le numéro d'identification (ESN) afin de le comparer avec le numéro crypté mémorisé (Sig_{M}) lors de la fabrication.

## Description

L'invention concerne un dispositif comportant un système de protection pour un numéro d'identification, formé à partir de moyens de cryptage d'identification pour crypter ledit numéro d'identification et de moyens de mémorisation pour mémoriser, en un premier temps, ledit numéro d'identification crypté.

L'invention concerne aussi un procédé de protection d'un numéro d'identification contenu, notamment, dans un dispositif du genre mentionné ci-dessus.

Un tel dispositif trouve d'importantes applications notamment dans le domaine de la radiotéléphonie mobile du genre AMPS (ou TACS et ETACS). Des numéros importants dans ce domaine sont, notamment, les numéros d'identification (ESN) et (MIN) des dispositifs qui peuvent se raccorder au réseau AMPS. Ces numéros correspondent respectivement au numéro de série du dispositif et au numéro d'identification de ce dernier. Ces numéros sont la proie de pirates qui essayent de s'approprier un code qui ne leur appartient pas de sorte que la facturation des communications soit imputée à un autre qu'à eux-mêmes.

Pour se protéger de ce genre de manoeuvres malhonnêtes, on connaît un système de protection qui est décrit dans le brevet des Etats-Unis d'Amérique n° 5 392 356. Selon ce système connu le numéro d'identification, accompagné d'un code constructeur, est crypté et emmagasiné dans la mémoire du dispositif. Au démarrage du dispositif, on décrypte le numéro crypté et on teste la présence du code constructeur. Si celui-ci n'est pas reconnu, le poste est mis dans un état bloqué. Ceci prouve que le pirate n'a pas été à même de crypter convenablement son numéro d'identification et cela met en évidence une manoeuvre frauduleuse.

Ce système présente l'inconvénient que la protection réside dans le test du code constructeur et les numéros d'identifications ne sont pas forcément protégés par ce test.

La présente invention propose un dispositif du genre mentionné dans le préambule qui procure une protection renforcée du numéro et/ou des numéros d'identifications dudit dispositif.

Pour cela, un tel dispositif est remarquable en ce que le système de protection est formé, en outre, de moyens de comparaison pour mettre en oeuvre les moyens de cryptage d'identifications pour crypter, en un deuxième temps, le numéro d'identification afin de le comparer avec le numéro crypté mémorisé dans ledit premier temps.

Ainsi, la comparaison porte sur tout le numéro d'identification et non pas sur le fait de retrouver un certain code, un code constructeur, par exemple.

Selon un mode de réalisation préféré de l'invention, le dispositif comportant déjà des moyens de cryptage de trafic est remarquable en ce que les moyens de cryptage d'identification sont constitués par lesdits moyens de trafic.

Ce mode de réalisation permet d'utiliser le système de cryptage (CAS) imposé par les normes régissant les réseaux ETACS et le système CAVE utilisé, lui, par les réseaux AMPS. Ainsi le cryptage des numéros d'identification n'implique aucun moyen supplémentaire et la mise en oeuvre de l'invention est de faible coût.

La description suivante, faite en regard des dessins ci-annexés, le tout donné à titre d'exemple non limitatif fera bien comprendre comment l'invention peut être réalisée.
La figure 1 montre un dispositif conforme à l'invention.
La figure 2 montre montre une implémentation en mémoire de différentes valeurs.
La figure 3 montre un ordinogramme explicitant le fonctionnement du dispositif de la figure 1.
La figure 4 montre un ordinogramme explicitant un premier mode d'inscription de la signature du numéro.
La figure 5 montre un ordinogramme explicitant un deuxième mode d'inscription de la signature du numéro.

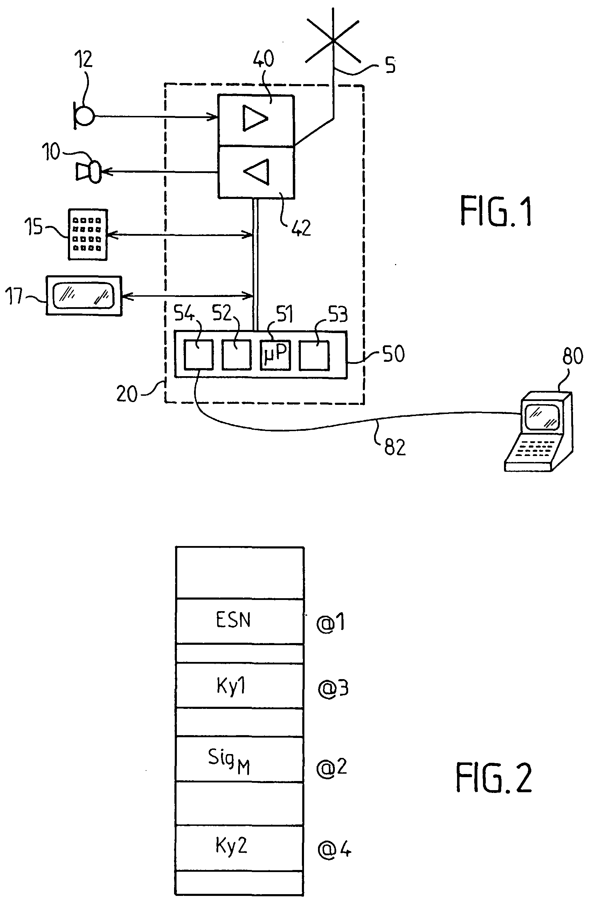

Le dispositif montré à la figure 1 est un poste radio mobile destiné à être raccordé à un réseau du genre ETACS ou AMPS. Il se compose des éléments habituels à ce genre de dispositif, à savoir une antenne 5, un microphone 12, un écouteur 10, un clavier 15 un écran 17 et d'un ensemble électronique 20. Cet ensemble électronique comporte une partie émission 40 et une partie réception 42 qui permettent le trafic radioélectrique en utilisant l'antenne 5 et donc l'échange de parole en utilisant l'écouteur 10 et le microphone 12, sans oublier les échanges de signalisation qui sont impliqués par l'emploi du clavier 15. Tout cet ensemble électronique est régi par un ensemble de commande 50 formé à partir d'au moins un micro-calculateur 51 auquel sont rattachées, de manière usuelle, une mémoire programme 52, une mémoire vive 53 et une mémoire inscriptible 54 du genre mémoire flash ou EEPROM. C'est dans cette mémoire 54 que différents numéros d'identification peuvent être mémorisés. On s'intéressera, dans la suite du présent mémoire, au numéro désigné par ESN qui est le numéro de série et qui est enregistré à une adresse @1 de l'espace mémoire dudit micro-calculateur 51 (voir fig.2). Pour se protéger de manoeuvres frauduleuses telles que celles décrites dans le brevet américain n° 5 392 356, il convient de prendre des mesures pour s'assurer de l'intégrité de ce numéro et que celui-ci ne soit pas modifié.

Conformément à l'invention, pour s'assurer de l'intégrité du numéro ESN, celui-ci est crypté préalablement, en un premier temps au sein de l'usine de fabrication, de préférence par un desdits algorithmes de cryptage, et ce numéro crypté Sig_{M} est emmagasiné en un emplacement @2 du plan d'adressage du micro-calculateur 51. Ce cryptage peut être fait dans le lieu de fabrication du dispositif par un micro-ordinateur 80 qui effectue le cryptage et l'insère dans la mémoire 54 au moyen d'une liaison 82.

D'une manière avantageuse, on utilise les algorithmes de cryptage CAS et CAVE précités qui sont utilisés à des fins de trafic, comme cela est imposé par les normes qui régissent le fonctionnement des réseaux radioélectriques mobiles AMPS et ETACS.

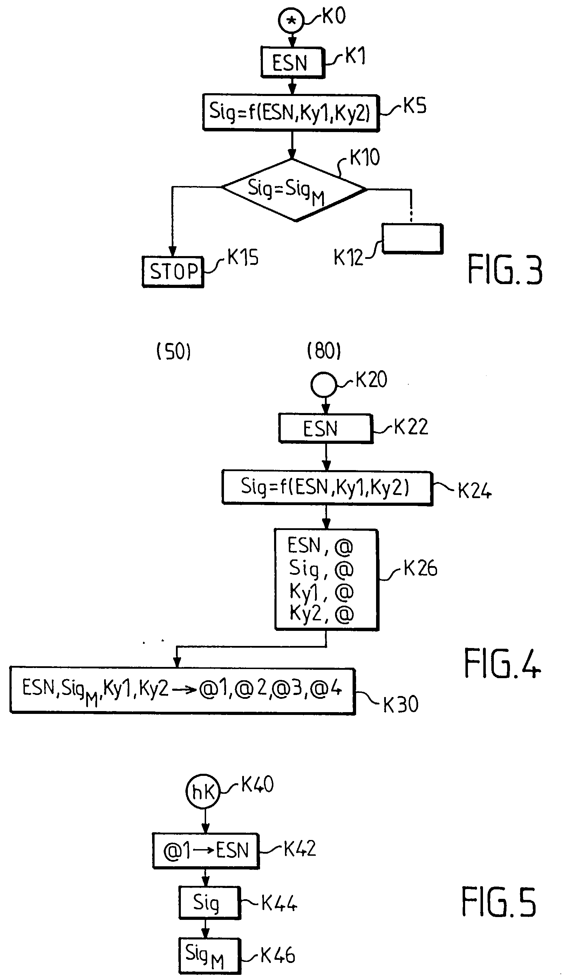

A chaque démarrage du dispositif, on teste l'intégrité de ce numéro ESN. Ceci est explicité à l'ordinogramme de la figure 3.

La case K0 indique le démarrage du dispositif, sa mise sous tension. Puis, le numéro ESN est lu, case K1 et il est crypté en utilisant un algorithme de cryptage utilisant deux clés Ky1 et Ky2 qui se trouvent respectivement à des adresses @3 et @4 (voir figure 2). Ces clés ne se trouvent pas forcément dans la mémoire 54 on peut prendre des mots contenus dans la mémoire programme 52. On obtient ainsi une signature Sig (case K5) qui est ensuite comparée, case K10 avec celle préalablement établie à l'adresse @2 (voir figure 2). S'il y a concordance, le dispositif continue son processus de mise en route, case K12, sinon il est bloqué, case K15. Le dispositif est inhibé.

La figure 4 montre un ordinogramme qui explicite la phase de mémorisation préalable du numéro ESN et de sa signature au moyen du micro-ordinateur 80. Cette phase débute à la case K20, puis un numéro ESN est attribué au dispositif, case K22, la signature Sig (case K24) est obtenue par cryptage de ce numéro et en utilisant deux clés comme le propose l'algorithme CAS précité. Si on utilise l'algorithme de cryptage CAVE (AMPS) on utilisera 4 clés. Ces clés sont arbitraires et peuvent être déterminées par un générateur pseudo-aléatoire, par exemple. Puis on détermine les adresses auxquelles ces différentes valeurs vont être emmagasinées case K26. Tout ceci est transmis vers la mémoire 54 pour que l'inscription soit effective (case K30).

La figure 5 montre un ordinogramme qui explicite la phase de mémorisation préalable du numéro ESN sans utiliser de micro-ordinateur. Pour cela on utilise directement l'ensemble de commande 50 du dispositif. Cette phase débute à la case K40 qui est une phase de détection d'une combinaison de touches appuyées. Le numéro ESN déjà inscrit est lu (case K42), puis crypté pour fournir la signature Sig (case K44), puis la signature est emmagasinée à l'adresse @2 (voir figure 2) case K46.

Bien que l'on ait fait une description relative au cryptage CAS. l'invention se rapporte aussi au cryptage CAVE destiné au système AMPS qui implique, comme déjà dit, 4 clés Ky1', Ky2', Ky3' et Ky4' mises à des adresses @3', @4', @5' et @6' respectivement (non montré sur les figures).

## Revendications

1. Dispositif comportant un système de protection pour un numéro d'identification, formé à partir de moyens de cryptage d'identification pour crypter ledit numéro d'identification et de moyens de mémorisation pour mémoriser, en un premier temps, ledit numéro d'identification crypté, caractérisé en ce que le système de protection est formé en outre de moyens de comparaison pour mettre en oeuvre les moyens de cryptage d'identification pour crypter, en un deuxième temps, le numéro d'identification afin de le comparer avec le numéro crypté mémorisé dans ledit premier temps.

2. Dispositif selon la revendication 1, caractérisé en ce qu'il comporte un système d'autorisation-inhibition pour autoriser et pour inhiber son fonctionnement, muni d'une commande d'inhibition pour recevoir un ordre d'inhibition provenant desdits moyens de comparaison en cas de discordance entre le numéro crypté dans le deuxième temps et le numéro crypté mémorisé dans le premier temps.

3. Dispositif selon la revendication 2, caractérisé en ce que le système d'autorisation-inhibition est mis en oeuvre au démarrage du dispositif.

4. Dispositif selon l'une des revendications 1 à 3 comportant des moyens de cryptage de trafic, caractérisé en ce que les moyens de cryptage d'identification sont constitués par lesdits moyens de cryptage.

5. Procédé de protection d'un numéro d'identification, notamment d'un dispositif selon l'une des revendications 1 à 4, caractérisé en ce que ledit numéro est crypté puis mémorisé et en ce que pour valider le numéro il est à nouveau crypté puis comparé avec le numéro mémorisé.

6. Procédé de protection selon la revendication 4, caractérisé en ce que le numéro d'identification est crypté par un dispositif extérieur avant d'être mémorisé.

7. Procédé de protection selon la revendication 4, caractérisé en ce que le numéro d'identification est crypté par le dispositif lui-même avant d'être mémorisé.
